# EUROPEAN PATENT APPLICATION

(11) **EP 1 796 390 A1**
(43) Date of publication of application: **13.06.2007**
(21) Application number: 05785925.8
(22) Date of filing: 21.09.2005
(51) Int. Cl.: H04N 7/173, H04N 5/44

(54) **BROADCAST PROCESSING SYSTEM**

(30) Priority: 24.09.2004 JP 2004277532
(71) Applicant: NEC Personal Products, Ltd., Shinagawa-ku Tokyo141-0032 (JP)
(72) Inventor: SUZUKI, Joji, c/o NEC Personal Products, Ltd., Tokyo 141-0032 (JP)
(74) Representative: Moir, Michael Christopher
(86) International application number: PCT/JP2005/017348
(87) International publication number: WO 2006/033338

(57) **Abstract**

A tuner of a first broadcast processing apparatus of a plurality of broadcast processing apparatus receives an EPG (Electric Program Guide) data transmitted from a server section through an antenna and a tuner of a second broadcast processing apparatus of the plurality of broadcast processing apparatus other than the first broadcast processing apparatus receives a broadcasting data transmitted from the server section through the antenna. At this time, the EPG control section of the first broadcast processing apparatus stores the EPG data received by the tuner of the first broadcast processing apparatus into a storage unit of the first broadcast processing apparatus as a reception EPG designating data, and transmits the reception EPG designating data to a network. The EPG control section of the second broadcast processing apparatus receives the reception EPG designating data transmitted from the first broadcast processing apparatus via the network, and stores it to a storage unit of the second broadcast processing apparatus.

## Description

### Technical Field

The present invention relates to a broadcast processing system for transmitting and receiving broadcasting data.

### Background Art

Recently, broadcast processing apparatuses are widely used which can acquire program guide information (referred to as EPG (Electric Program Guide)) for describing a program when receiving the broadcasting data of that program. The broadcast processing apparatus is used by a user, and it is provided with a tuner and a receiver. The broadcast processing apparatus is connected to an antenna, and performs unidirectional communication to receive a broadcasting wave from a server through the antenna. The server transmits the broadcasting data of a program with the broadcasting wave, and transmits an EPG with the broadcasting wave periodically. The server transmits the EPG with the broadcasting wave, when transmitting the broadcasting data of the program of a specific channel with the broadcasting wave. The EPG is utilized as a guide for selecting the program to be viewed and performing recording/recording reservation of the program.

As a method to acquire the EPG data from the broadcasting wave, there are a terrestrial analog broadcasting system, a BS digital system, and a terrestrial digital broadcasting system. The terrestrial analog system and the BS digital system are systems in which a broadcast processing apparatus receives the broadcasting data of a specific channel among a plurality of channels to acquire the EPG data on which programs of the plurality of channels are written. The terrestrial digital system is a system in which the channel is considered as a specific channel, when the broadcast processing apparatus is receiving the broadcasting data, and the EPG data on which only the program of the specific channel is written is acquired by receiving the broadcasting data of the specific channel.

The user can select a program by either of the above-described methods, and view/record (recording-reserve) the broadcasting data of that program by using the broadcast processing apparatus. In this case, the tuner of the broadcast processing apparatus receives the broadcasting data of the program that is transmitted from the server through the antenna.

Further, the user can select the program of a specific channel by the above-described method, and view/record the broadcasting data of that program by using the broadcast processing apparatus. In this case, the tuner of the broadcast processing apparatus receives through the antenna, the broadcasting data of the program of the specific channel that is transmitted from the server, while receiving the EPG transmitted from the server through the antenna. Thus, the broadcast processing apparatus can acquire the latest EPG, and the user can select the program that has been added/changed through reading the latest EPG by using the broadcast processing apparatus, and view/record (recording-reserve) the broadcasting data of that program.

However, in order for the broadcast processing apparatus to acquire the latest EPG, it is necessary to receive the broadcasting data of the specific channel. Thus, when the tuner of the broadcast processing apparatus is being used (for example, during a recording action), it is not possible for the broadcast processing apparatus to acquire the latest EPG at all times. Recently, a broadcast processing apparatus is widespread that can be performing automatic recording reservation based on the information of the EPG. In this case, it is not possible to deal with a situation where a program is suddenly added/changed. Thus, it is desired that the latest EPG be acquired at all times.

In conjunction with the above descriptions, Japanese Laid Open Patent Application (JP-P2004-158969A: first conventional example) discloses a video system that can efficiently and promptly select another video unit that uses a resource, and can use the resource within the other video unit independently. This video system includes a plurality of video units that are connected to a network. Each of the plurality of video units includes the resource (tuner). There are three video units as the plurality of the video units, which are referred to as a first video unit, a second video unit, and a third video unit. The specifications of the tuners of the first video unit and the second video unit are for the terrestrial wave systems (terrestrial analog system, terrestrial digital system), and the specification of the tuner of the third video unit is the BS system (BS digital system).

The user can view/record the broadcasting data of a program of the terrestrial wave system by using the first video unit. In this case, the tuner of the first video unit receives the broadcasting data of the program of the terrestrial wave system through the antenna.

Further, the user can view/record the broadcasting data of another program of the terrestrial wave system. In this case, since the tuner of the first video unit is not available, i.e. the tuner of the first video unit is being used, the first video unit uses the tuner of the second video unit through the network. At that time, the first video unit transmits a use request for using the tuner of the second video unit to the second video unit through the network. The tuner of the second video unit receives the broadcasting data of another program of the terrestrial wave system through the antenna, and transmits it to the first video unit through the network in accordance with the use request.

Moreover, the user can view/record the broadcasting data of the program of the BS system. In this case, since the tuner of the first video unit is not a prescribed tuner, i.e. specification of the tuner of the first video unit is not for the BS system, the first video unit uses the tuner of the third video unit through the network. In that case, the first video unit transmits a use request for using the tuner of the third video unit to the third video unit through the network. The tuner of the third video unit receives the broadcasting data of the program of the BS system through the antenna, and transmits it to the first video unit through the network in accordance with the use request.

Further, International Publication W099/63752 pamphlet includes (second conventional example) discloses an information processing apparatus which allows the receiver side to form an application easily by rearranging the transmitted EPG data into a list configuration. This information processing apparatus includes a tuner and a controller. The tuner receives EPG service information and EPG program information through the antenna as the EPG data that is transmitted with the broadcasting data. At that time, the tuner forms an EPG service list regarding receivable channels from the EPG service information by using a descriptor of a general-purpose format. Further, the tuner converts the EPG program information to an EPG event list by utilizing the descriptor of the wide-use format. The controller as the receiver side transmits a readout request for reading out the EPG data to the tuner through a bus for forming an application based on the EPG data. According to the readout request, the tuner transmits the EPG service list and the EPG event list to the controller as the EPG data via the bus. This allows another apparatus (controller) than the tuner to handle the EPG data easily.

### Disclosure of Invention

An object of the present invention is to provide a broadcast processing system that can acquire the latest EPG at all times.

The broadcast processing system of the present invention includes a plurality of broadcast processing apparatuses that are connected to an antenna and a network. Each of the plurality of broadcast processing apparatuses includes a tuner, an EPG control section, and a storage unit. A tuner of a first broadcast processing apparatus of the plurality of broadcast processing apparatuses receives EPG data transmitted from the server through the antenna, and a tuner of a second broadcast processing apparatus of the plurality of broadcast processing apparatuses other than the first broadcast processing apparatus receives a broadcasting data transmitted from the server through the antenna.

At this time, the EPG control section of the first broadcast processing apparatus stores the EPG data received by the tuner of the first broadcast processing apparatus into the storage unit of the first broadcast processing apparatus as the reception EPG designating data, and transmits the reception EPG designating data to the network.

The EPG control section of the second broadcast processing apparatus receives the reception EPG designating data transmitted from the first broadcast processing apparatus via the network, and stores it to the storage unit of the second broadcast processing apparatus.

The first broadcast processing apparatus in the broadcast processing system of the present invention can acquire the latest EPG data by storing the reception EPG designating data in the storage unit of the first broadcast processing apparatus, when the tuner thereof receives the EPG data transmitted from the server through the antenna. Even when the user is viewing/recording the broadcasting data of a program by using the second broadcast processing apparatus, i.e. even when the tuner of the second broadcast processing apparatus is being used, the second broadcast processing apparatus can acquire the latest EPG data by storing the reception EPG designating data in the storage unit of the second broadcast processing apparatus 2, when receiving the reception EPG designating data transmitted from the first broadcast processing apparatus via the network. As described, according to the broadcast processing system of the present invention, the plurality of broadcast processing apparatuses can acquire the latest EPG data at all times. Thus, even if a program is added/changed, the user can read the latest EPG data and select that program to view/record (recording-reserve) the broadcasting data of the program. Thus, even if the program is added/changed, the user can read the latest EPG data and select that program to view/record (recording-reserve) the broadcasting data of the program.

In the broadcast processing system of the present invention, a first EPG designating data containing a first acquisition date/time and a first EPG data is stored in the storage unit of the first broadcast processing apparatus.

The EPG control section of the first broadcast processing apparatus refers to the storage unit of the first broadcast processing apparatus to compare the EPG data received by the tuner of the first broadcast processing apparatus and the first EPG data contained in the first EPG designating data.

When the EPG received by the tuner of the first broadcast processing apparatus is consistent with the first EPG data contained in the first EPG designating data, the EPG control section of the first broadcast processing apparatus sets the reception date/time at which the EPG data is received by the tuner of the first broadcast processing apparatus as the first acquisition date/time, and stores it in the storage unit of the first broadcast processing apparatus by relating it to the first EPG data that is contained in the first EPG designating data.

When the EPG data received by the tuner of the first broadcast processing apparatus is not consistent with the first EPG data contained in the first EPG designating data, the EPG control section of the first broadcast processing apparatus stores the reception EPG designating data that contains the EPG data and the reception date/time in the storage unit of the first broadcast processing apparatus as the fist EPG designating data, and transmits the reception EPG designating data to the network.

In the broadcast processing system of the present invention, there are cases where the number of times of updating the EPG data by the server is more than the number of times of transmitting the EPG data. That is, the server may transmit the EPG data even when the EPG data is not updated in a certain period of time. In such a case, if the contents of the EPG data received by the tuner and the first EPG data contained in the reception EPG designating data are not consistent, it is preferable for the first broadcast processing apparatus in the broadcast processing system of the present invention to store the reception EPG designating data in the storage unit of the first broadcasting apparatus as the first EPG designating data, and transmit the reception EPG designating data to the network. This allows the broadcast processing apparatus to avoid useless communication such as transmitting the reception EPG designating data that contains the non-updated EPG data to the network. Thus, the power consumed through the communication can be reduced.

In the broadcast processing system of the present invention, a second EPG designating data containing the first acquisition date/time and the first EPG data is stored in the storage unit of the second broadcast processing apparatus.

When receiving the reception EPG designating data transmitted from the first broadcast processing apparatus, the EPG control section of the second broadcast processing apparatus refers to the storage unit of the second broadcast processing apparatus to compare the reception date/time contained in the reception EPG designating data and the first acquisition date/time contained in the second EPG designating data.

When the reception date/time contained in the reception EPG designating data is newer than the first acquisition date/time contained in the second EPG designating date stored in the storage unit of the second broadcast processing apparatus, the EPG control section of the second broadcast processing apparatus stores the reception EPG designating data in the storage unit of the second broadcast processing apparatus as the second EPG designating data.

The plurality of the broadcast processing apparatuses of the broadcast processing system according to the present invention acquire the latest EPG data at all times, so that the same EPG data is stored in the storage units thereof at all times. Thus, when the second broadcast processing apparatus receives the reception EPG designating data that is transmitted from the first broadcast processing apparatus, it is not necessary to compare the contents of the EPG data contained in the reception EPG designating data and the first EPG data contained in the second EPG designating data. Rather, the reception date/time contained in the reception EPG designating data and the first acquisition date/time contained in the second EPG designating data may only be compared. As described, when the reception date/time contained in the reception EPG designating data from the first broadcast processing apparatus is newer than the first acquisition date/time contained in the second EPG designating data, it is preferable for the second broadcast processing apparatus to store the reception EPG designating data in the storage unit of the second broadcast processing apparatus as the first EPG designating data.

In the broadcast processing system of the present invention, when the EPG data received by the first broadcast processing apparatus is not consistent with the first EPG data contained in the first EPG designating data, the EPG control section of the first broadcast processing apparatus stores the reception EPG designating data, which contains the EPG data, the reception date/time, and an identifier for identifying the system when receiving the EPG data, in the storage unit of the first broadcast processing apparatus as the first EPG designating data, and transmits the reception EPG designating data to the network.

The identifier indicates whether or not the tuner of the second broadcast processing apparatus can receive the broadcasting data corresponding to the EPG data.

The EPG control section of the second broadcast processing apparatus receives the reception EPG designating data transmitted from the first broadcast processing apparatus. At that time, the identifier contained in the reception EPG designating data indicates that the tuner of the second broadcast processing apparatus can receive the broadcasting data corresponding to the EPG data. Further, the reception date/time contained in the reception EPG designating data is newer than the first acquisition date/time contained in the second EPG data that is stored in the storage unit of the second broadcast processing apparatus. In this case, the EPG control section of the second broadcast processing apparatus stores the reception EPG data in the storage unit of the second broadcast processing apparatus as the second EPG data.

For example, it is assumed that the specifications of the tuner of the first broadcast processing apparatus are the terrestrial analog system, the BS digital system, the terrestrial digital system, and the specifications of the tuner of the second broadcast processing apparatus are the terrestrial analog system, the BS digital system. When the first broadcast processing apparatus receives the EPG data of the terrestrial analog system from the server and transmits the reception EPG designating data to the network, the identifier contained in the reception EPG designating data indicates that the tuner of the second broadcast processing apparatus can receive the broadcasting data that corresponds to the EPG of the terrestrial analog system, since the specification of the tuner of the second broadcast processing apparatus is also the terrestrial analog system. Therefore, the second broadcast processing apparatus can use the EPG data contained in the reception EPG designating data from the first broadcast processing apparatus. When the reception date/time contained in the reception EPG designating data is newer than the first acquisition date/time contained in the second EPG designating data, it is preferable for the second broadcast processing apparatus to store the reception EPG designating data in the storage unit of the second broadcast processing apparatus as the first EPG designating data. As described, when there are the same systems in the specifications of the tuners of the plurality of the broadcast processing apparatuses in the broadcast processing system of the present invention, the broadcast processing apparatuses can acquire the latest EPG of the same system at all times.

In the broadcast processing system of the present invention, the tuner of the first broadcast processing apparatus receives the broadcasting data of a specific channel transmitted from the server through the antenna, and receives the EPG transmitted from the server through the antenna.

### Brief Description of Drawings

Fig. 1 shows the configuration of a broadcast processing system according to the present invention;
Fig. 2 shows the configuration of a broadcast processing apparatus 1 of the broadcast processing system according to the present invention;
Fig. 3 shows a system database 16-1 of the broadcast processing apparatus 1 of the broadcast processing system according to the present invention;
Fig. 4 shows an EPG database 17-1 of the broadcast processing apparatus 1 of the broadcast processing system according to the present;
Fig. 5 shows the configuration of a broadcast processing apparatus 2 of the broadcast processing system according to the present invention;
Fig. 6 shows a system database 16-2 of the broadcast processing apparatus 2 of the broadcast processing system according to the present invention.
Fig. 7 shows an EPG database 17-2 of the broadcast processing apparatus 2 of the broadcast processing system according to the present invention.
Fig. 8 shows the configuration of a broadcast processing apparatus 3 of the broadcast processing system according to the present invention.
Fig. 9 shows a system database 16-3 of the broadcast processing apparatus 3 of the broadcast processing system according to the present invention.
Fig. 10 shows an EPG database 17-3 of the broadcast processing apparatus 3 of the broadcast processing system according to the present invention;
Fig. 11 is a flowchart showing the operation of the broadcast processing system according to the present invention;
Fig. 12 is a flowchart for showing EPG/antenna receiving processing as the operation of the broadcast processing system according to the present invention;
Fig. 13 is an illustration for describing reception EPG data in the broadcast processing system according to the present invention;
Fig. 14 is a flowchart for showing EPG/network receiving processing as the operation of the broadcast processing system according to the present invention; and
Fig. 15 is an illustration for describing the operation of the broadcast processing system according to the present invention.

### Best Mode for Carrying Out the Invention

Hereinafter, a broadcast processing system of the present invention will be described in detail with reference to the attached drawings.

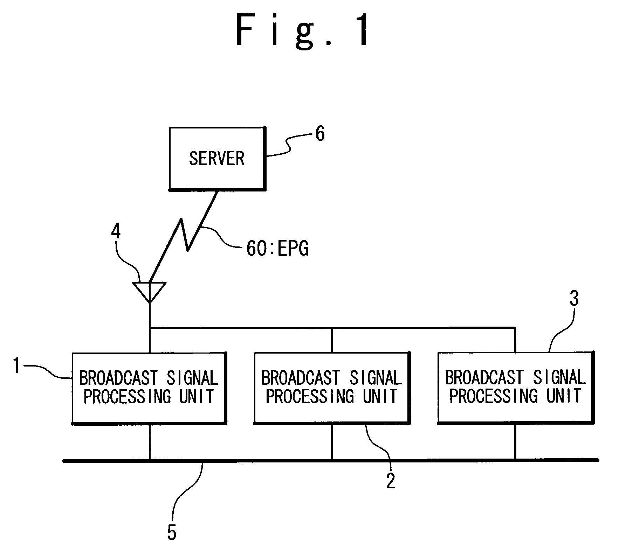

Fig. 1 shows the configuration of the broadcast processing system according to an embodiment of the present invention. The broadcast processing system according to the embodiment of the present invention includes a plurality of broadcast processing apparatuses. Each of the plurality of broadcast processing apparatuses is used by a user as a television, a PC (Personal Computer), or a PVR (Personal Video Recorder). In the present embodiment, it is assumed that there are three broadcast processing apparatuses provided in a household, for example, as the plurality of broadcast processing apparatuses, each of which is expressed as the broadcast processing apparatus 1, 2, and 3, respectively. Each of the broadcast processing apparatuses 1, 2, and 3 is connected to an antenna 4 and a network 5. Each of the broadcast processing apparatuses 1, 2, and 3 performs unidirectional communication to receive a broadcasting wave from a server section 6 through the antenna 4. The server section 6 transmits the broadcasting data of a program with a broadcasting wave, and transmits program guide information (referred to as Electric Program Guide: EPG, hereinafter) data 60 for describing the program from the broadcasting wave. The server section 6 transmits the EPG data 60 with the broadcasting wave when transmitting the broadcasting data of the program of a specific channel. The EPG data 60 is used as a guide for selecting the program to be viewed and for performing recording and recording-reservation of the program.

As methods to acquire the EPG data from the broadcasting wave, there are a terrestrial analog broadcasting system, a BS digital system, and a terrestrial digital broadcasting system. The terrestrial analog system and the BS digital system are the systems in which the broadcast processing apparatuses 1 - 3 receive the broadcasting data of a specific channel among a plurality of channels to obtain the EPG data on which programs of the plurality of channels are written. The terrestrial digital system is a system in which the channel when any of the broadcast processing apparatuses 1 - 3 are receiving the broadcasting data is considered as a specific channel, and the EPG data is acquired on which only the program of the specific channel is written by receiving the broadcasting data of the specific channel.

Hereinafter, one of the terrestrial analog system, the BS digital system, and the terrestrial digital system, is referred to as a first system, another one is referred to as a second system, and the other one is referred to as a third system.

When the server section 6 is constituted from three servers, each of the three servers transmits the broadcasting data of the first system, the second system, and the third system with the broadcasting wave. Each of the three servers transmits the EPG data 60 of the first system, the second system, and the third system with the broadcasting wave, when transmitting the broadcasting data of the program of a specific channel of the first system, the second system, and the third system with the broadcasting wave.

Further, when the server section 6 is a single server, the single server transmits the broadcasting data of the first system, the second system, and the third system with the broadcasting wave. The single server transmits the EPG data 60 of the first system, the second system, and the third system with the broadcasting wave, when transmitting the broadcasting data of the program of a specific channel of the first system, the second system, and the third system with the broadcasting wave.

The antenna 4 has a function of receiving the broadcasting data of the program of the first system, the second system, and the third system, which is transmitted form the server section 6. Further, the antenna 4 has a function of receiving the EPG data 60 of the first system, the second system, and the third system, when receiving the broadcasting data of the program of a specific channel of the first system, the second system, and the third system, which is transmitted from the server section 6.

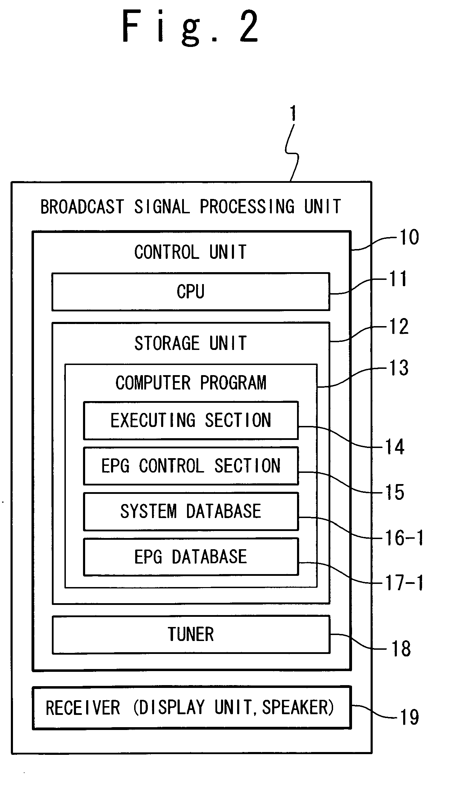

Fig. 2 shows the configuration of the broadcast processing apparatus 1 of the broadcast processing system according to the embodiment of the present invention. The broadcast processing apparatus 1 includes a control unit 10 and a receiver 19. The receiver 19 includes a display unit and a speaker. The control unit 10 includes a CPU (Central Processing Unit) 11, a storage unit 12, a tuner 18, and an input unit (not shown). The input unit includes a keyboard, a pointing unit, and a remote controller. The storage unit 12 stores a computer program 13 that is executed by the CPU 11. The computer program 13 includes an execution section 14, an EPG control section 15, a system database 16-1, and an EPG database 17-1. The operations of the tuner 18, the execution section 14, and the EPG control section 15 of the broadcast processing apparatus 1 will be described later.

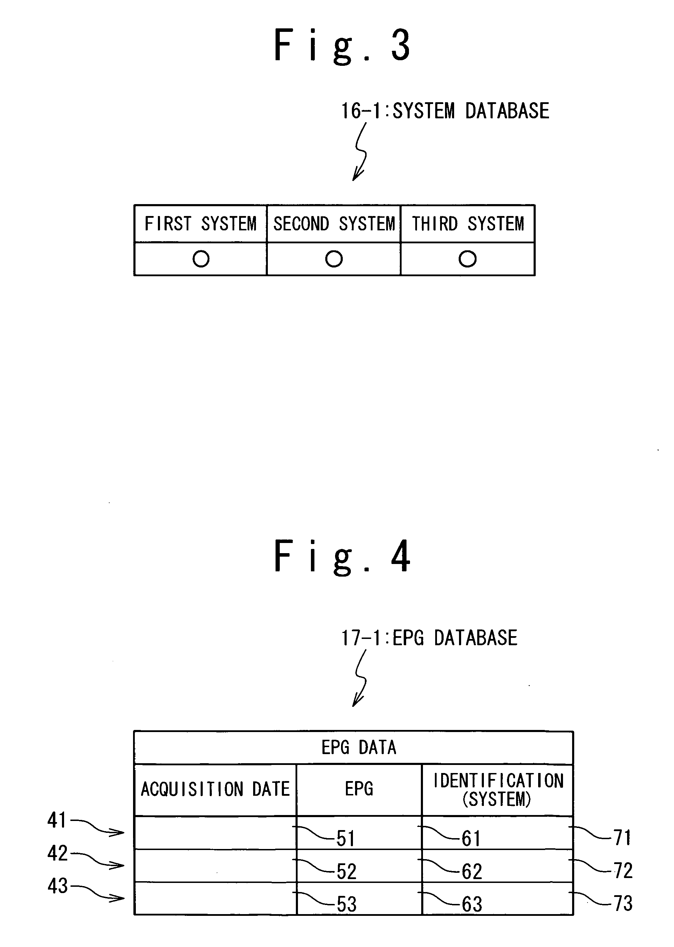

As shown in Fig. 3, as a system data, a first system data indicating the first system, a second system data indicating the second system, and a third system data indicating the third system are stored in the system database 16-1. That is, in the present embodiment, specifications of the tuner 18 of the broadcast processing apparatus 1 are the first system, the second system, and the third system. Therefore, the user can give a command for selecting a program of one of the first, second, and third systems by using the input unit of the broadcast processing apparatus 1. The execution section 14 of the broadcast processing apparatus 1 refers to the system database 16-1 to control the tuner 18 when there is a command for one of the above-described systems. The tuner 18 of the broadcast processing apparatus 1 has a function of receiving through the antenna 4 the broadcasting data of the program of the one system, which is transmitted from the server section 6. Further, the tuner 18 of the broadcast processing apparatus 1 has a function of receiving the EPG data 60 of the one system through the antenna 4, when receiving the broadcasting data of the program of a specific channel of the one system, which is transmitted from the server section 6.

As shown in Fig. 4, the EPG database 17-1 has EPG designating data 41 - 43 stored therein, for example. The EPG designating data 41 includes acquisition date/time 51, EPG data 61 that shows the EPG data of the first system, and an identifier 71 for identifying the first system. The EPG designating data 42 includes acquisition date/time 52, EPG data 62 that shows the EPG data of the second system, and an identifier 72 for identifying the second system. The EPG designating data 43 includes acquisition date/time 53, EPG data 63 that shows the EPG data of the third system, and an identifier 73 for identifying the third system. The EPG designating data 41 - 43 stored in the EPG database 17-1 are utilized as a guide for selecting the program to be viewed and for performing recording/recording-reservation of the program, when the user uses the broadcast processing apparatus 1.

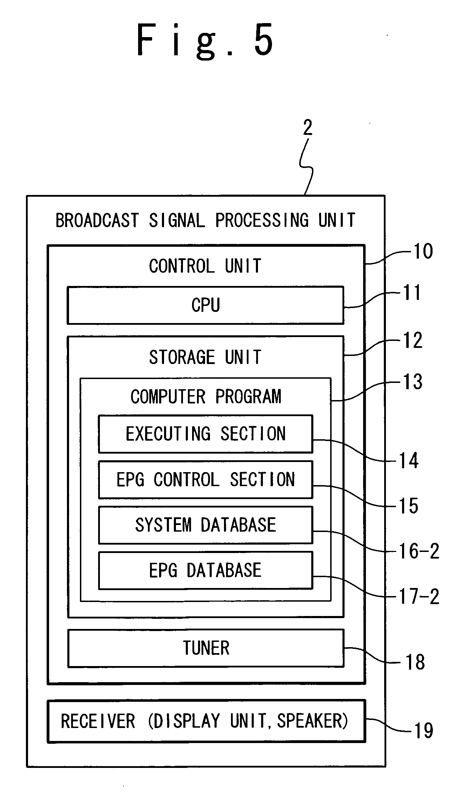

Fig. 5 shows the configuration of the broadcast processing apparatus 2 of the broadcast processing system according to the embodiment of the present invention. The broadcast processing apparatus 2 includes a control unit 10 and a receiver 19. The control unit 10 includes a CPU 11, a storage unit 12, a tuner 18, and an input unit (not shown). The storage unit 12 stores a computer program 13 that is executed by the CPU 11. The computer program 13 includes an execution section 14, an EPG control section 15, a system database 16-2, and an EPG database 17-2. The operations of the tuner 18, the execution section 14, and the EPG control section 15 of the broadcast processing apparatus 2 will be described later.

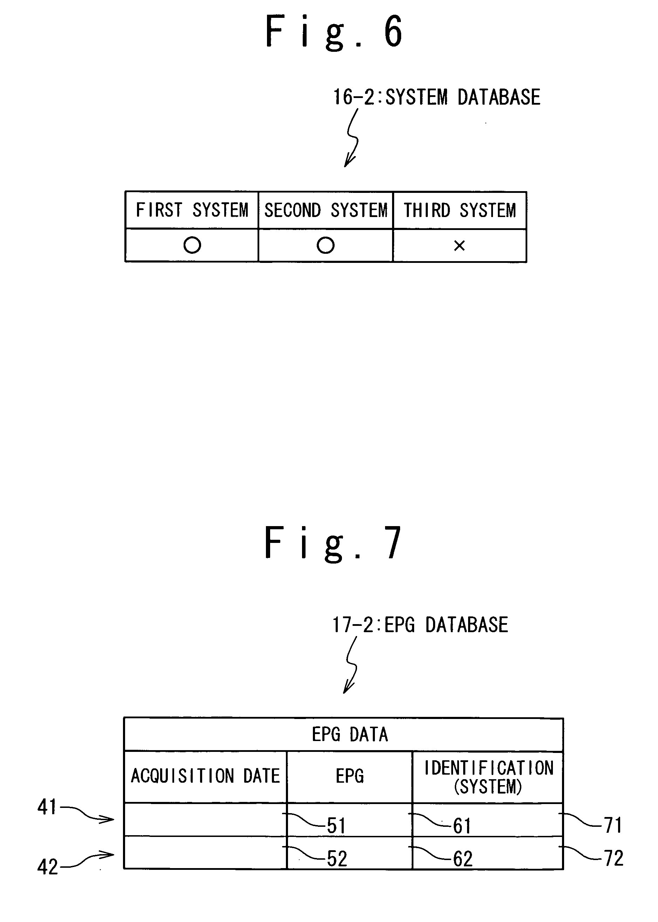

As shown in Fig. 6, as the system data, first system data indicating the first system and second system data indicating the second system are stored in the system database 16-2. That is, in the present embodiment, specifications of the tuner 18 of the broadcast processing apparatus 2 are for the first system and the second system. Therefore, the user can give a command for selecting a program of one of the first and second systems by using the input unit of the broadcast processing apparatus 2. The execution section 14 of the broadcast processing apparatus 2 refers to the system database 16-2 to control the tuner 18, when there is a command for one of the above-described systems. The tuner 18 of the broadcast processing apparatus 2 has a function of receiving through the antenna 4, the broadcasting data of the program of the one system, which is transmitted from the server section 6. Further, the tuner 18 of the broadcast processing apparatus 2 has a function of receiving the EPG data 60 of the one system through the antenna 4, when receiving the broadcasting data of the program of a specific channel of the one system, which is transmitted from the server section 6.

As shown in Fig. 7, the EPG database 17-2 has EPG designating data 41 and 42 stored therein, for example. The EPG designating data 41 and 42 are the same as the EPG designating data 41 and 42 stored in the EPG database 17-1. The EPG designating data 41 and 42 stored in the EPG database 17-2 are utilized as a guide for selecting the program to be viewed and for performing recording/recording-reservation of the program, when the user uses the broadcast processing apparatus 2.

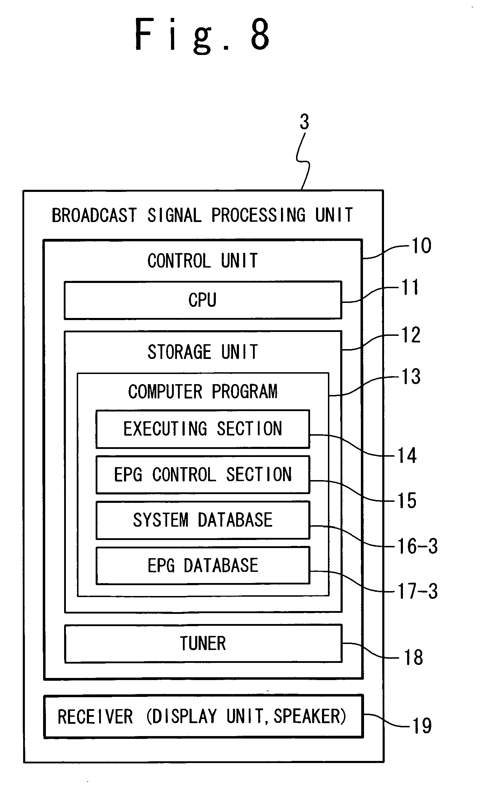

Fig. 8 shows the configuration of the broadcast processing apparatus 3 of the broadcast processing system according to the present invention. The broadcast processing apparatus 1 includes the control unit 10 and the receiver 19. The receiver 19 includes a display unit and a speaker. The control unit 10 includes the CPU 11, the storage unit 12, the tuner 18, and an input unit (not shown). The storage unit 12 includes a computer program 13 that is executed by the CPU 11. The computer program 13 includes an execution section 14, an EPG control section 15, a system database 16-3, and an EPG database 17-3. The operations of the tuner 18, the execution section 14, and the EPG control section 15 of the broadcast processing apparatus 3 will be described later.

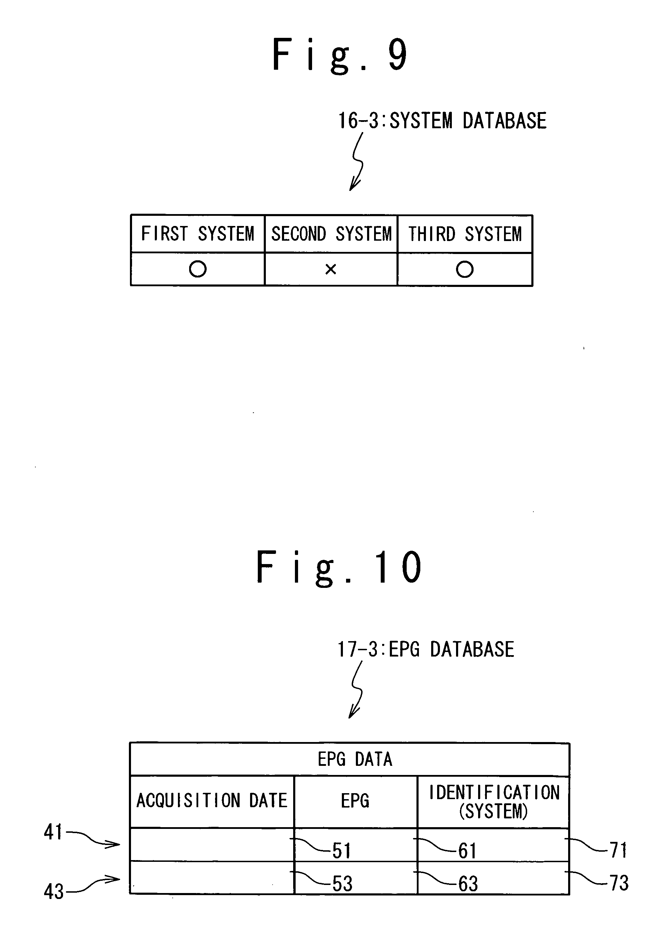

As shown in Fig. 9, as the system data, first system data indicating the first system and third system data indicating the third system are stored in the system database 16-3. That is, in the present embodiment, specifications of the tuner 18 of the broadcast processing apparatus 3 are for the first system and the third system. Therefore, the user can give a command for selecting a program of one of the first and third systems by using the input unit of the broadcast processing apparatus 3. The execution section 14 of the broadcast processing apparatus 3 by refers to the system database 16-3 to control the tuner 18, when there is a command for one of the above-described systems. The tuner 18 of the broadcast processing apparatus 3 has a function of receiving through the antenna 4, the broadcasting data of the program of the one system, which is transmitted from the server section 6. Further, the tuner 18 of the broadcast processing apparatus 3 has a function of receiving the EPG data 60 of the one system through the antenna 4, when receiving the broadcasting data of the program of a specific channel of the one system, which is transmitted from the server section 6.

As shown in Fig. 10, the EPG database 17-3 has EPG designating data 41 and 43 stored therein, for example. The EPG designating data 41 and 43 are the same as the EPG designating data 41 and 43 stored in the EPG database 17-1. The EPG designating data 41 and 43 stored in the EPG database 17-3 are utilized as the guide for selecting the program to be viewed and for performing recording/recording-reservation of the program, when the user uses the broadcast processing apparatus 3.

Next, the operation of the broadcast processing system according to the present invention will be described.

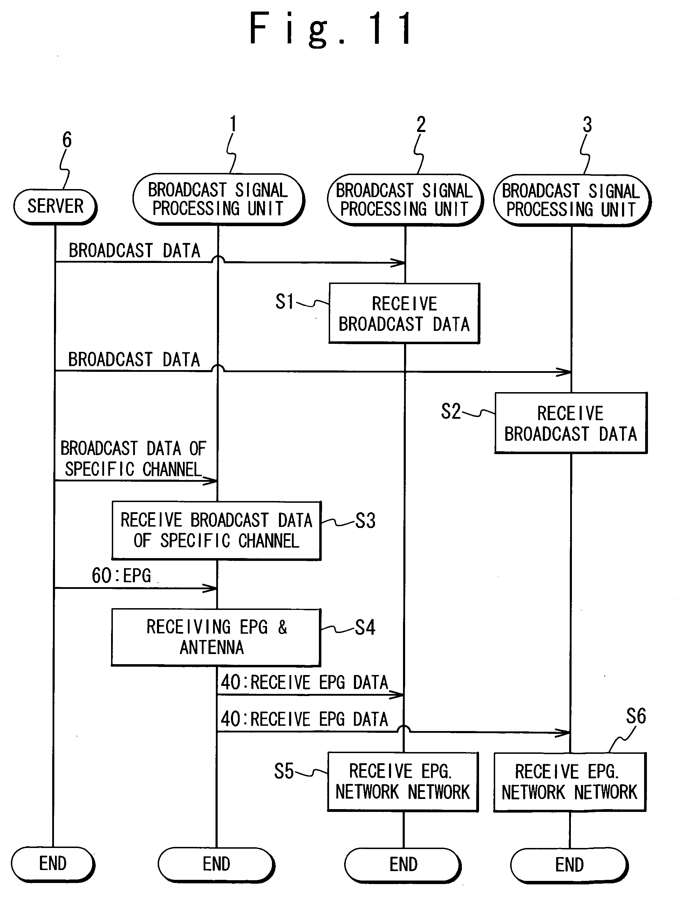

For example, a first user (parent) can select a program "1" of the first system and view the broadcasting data of the program "1" by using the broadcast processing apparatus 2 (step S1 of Fig. 11; broadcasting data receiving process).

In the broadcasting data receiving process (step S1), first, the first user gives a first system EPG display command through the input unit of the broadcast processing apparatus 2. In accordance with the first system EPG display command, the execution section 14 of the broadcast processing apparatus 2 outputs the EPG data 61 contained in the EPG designating data 41 and stored in the EPG database 17-2 to the receiver 19 of the broadcast processing apparatus 2. In this case, the EPG data 61 is displayed on the receiver 19 (display unit) of the broadcast processing apparatus 2. The first user reads the EPG data 61 displayed on the receiver 19 of the broadcast processing apparatus 2, and gives a viewing command for selecting the program "1" to be viewed through the input unit of the broadcast processing apparatus 2.

The execution section 14 of the broadcast processing apparatus 2 controls the tuner 18 in accordance with the viewing command. At that time, the tuner 18 of the broadcast processing apparatus 2 receives through the antenna 4, the broadcasting data of the program "1" of the first system transmitted from the server section 6.

The tuner 18 of the broadcast processing apparatus 2 decodes the broadcasting data of the program "1" of the first system received through the antenna 4, converts it to video data and audio data, and outputs them to the receiver 19 of the broadcast processing apparatus 2. In this case, the video data is displayed on the receiver 19 (display unit) of the broadcast processing apparatus 2, and the audio data is outputted as the sound to the receiver 19 (speaker) of the broadcast processing apparatus 2. Until the first user gives a viewing end command, the execution section 14 of the broadcast processing apparatus 2 controls the tuner 18, and the video data and the audio data are outputted to the receiver 19 of the broadcast processing apparatus 2.

For example, a second user (child) can select a program "2" of the first system and record the broadcasting data of the program "2" by using the broadcast processing apparatus 3 (step S2 of Fig. 11; broadcasting data receiving process).

In the broadcasting data receiving process (step S2), first, the second user gives a first system EPG display command through the input unit of the broadcast processing apparatus 2. In accordance with the first system EPG display command, the execution section 14 of the broadcast processing apparatus 3 outputs the EPG data 61 contained in the EPG designating data 41 and stored in the EPG database 17-3 to the receiver 19 of the broadcast processing apparatus 3. In this case, the EPG data 61 is displayed on the receiver 19 (display unit) of the broadcast processing apparatus 3. The second user reads the EPG data 61 displayed on the receiver 19 of the broadcast processing apparatus 3, and gives a recording set command for setting the program "2" to be recorded through the input unit of the broadcast processing apparatus 3. Recording reservation data containing the recording start date/time, recording end date/time, and the program to be recorded is set in the execution section 14 of the broadcast processing apparatus 3 (recording set process) in accordance with the recording set command given by the user.

In the recording set process, the execution section 14 of the broadcast processing apparatus 3 controls the tuner 18 at the recording start date/time contained in the recording reservation data. At that time, the tuner 18 of the broadcast processing apparatus 3 receives through the antenna 4, the broadcasting data of the program "2" of the first system transmitted from the server section 6.

Further, in the recording set process, the tuner 18 of the broadcast processing apparatus 3 decodes the broadcasting data of the program "2" of the first system received through the antenna 4, converts it to the video data and the audio data, and stores the video data and the audio data in a recording region (not shown) of the storage unit 12 of the broadcast processing apparatus 3. Until the time reaches the recording end date/time contained in the recording reservation data, the execution section 14 of the broadcast processing apparatus 3 controls the tuner 18, and the video data and the audio data are stored in the recording region of the storage unit 12 of the broadcast processing apparatus 3.

For example, the second user (child) can select a program "3" of a specific channel of the first system and view the broadcasting data of the program "3" by using the broadcast processing apparatus 1 (step S3 of Fig. 11; specific channel broadcasting data receiving process).

In the specific channel broadcasting data receiving process (step S3), first, the second user gives a first system EPG display command through the input unit of the broadcast processing apparatus 1. In accordance with the first system EPG display command, the execution section 14 of the broadcast processing apparatus 1 outputs the EPG data 61 contained in the EPG designating data 41 that is stored in the EPG database 17-1 to the receiver 19 of the broadcast processing apparatus 1. In this case, the EPG data 61 is displayed on the receiver 19 (display unit) of the broadcast processing apparatus 1. The second user reads the EPG data 61 displayed on the receiver 19 of the broadcast processing apparatus 1, and gives a viewing command for selecting the program "3" of the specific channel to be viewed through the input unit of the broadcast processing apparatus 1.

The execution section 14 of the broadcast processing apparatus 1 controls the tuner 18 in accordance with the viewing command. At that time, the tuner 18 of the broadcast processing apparatus 1 receives through the antenna 4, the broadcasting data of the program "3" of the specific channel of the first system transmitted from the server section 6.

The tuner 18 of the broadcast processing apparatus 1 decodes the broadcasting data of the program "3" of the specific channel of the first system received through the antenna 4, converts it to the video data and the audio data, and outputs them to the receiver 19 of the broadcast processing apparatus 1. In this case, the video data is displayed on the receiver 19 (display unit) of the broadcast processing apparatus 1, and the audio data is outputted as the sound to the receiver 19 (speaker) of the broadcast processing apparatus 1. Until the second user gives a viewing end command, the execution section 14 of the broadcast processing apparatus 1 controls the tuner 18, and the video data and the audio data are outputted to the receiver 19 of the broadcast processing apparatus 1.

The server section 6 transmits the EPG data 60 with the broadcasting wave, when transmitting the broadcasting data of the program "3" of the specific channel of the first system. The broadcast processing apparatus 1 performs the specific channel broadcasting data receiving process (step S3) and can acquire the latest EPG data 60, when the tuner 18 thereof receives the EPG data 60 transmitted from the server section 6 through the antenna 4 (step S4 of Fig. 11; EPG/antenna receiving process).

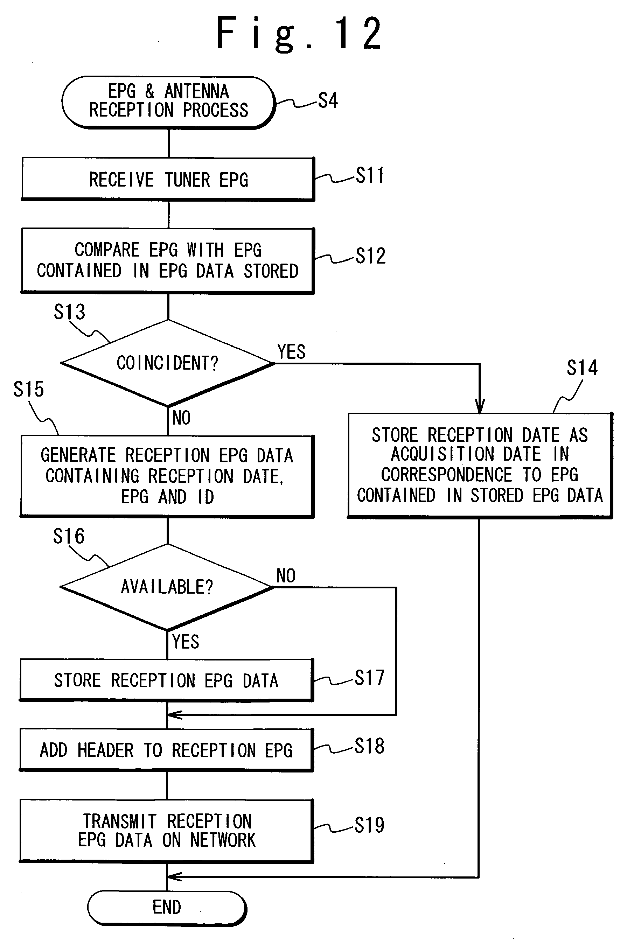

In the EPG/antenna receiving process (step S4), first, the tuner 18 of the broadcast processing apparatus 1 receives the EPG data 60 of the first system transmitted from the server section 6 through the antenna 4 (step S11 of Fig. 12). The EPG control section 15 of the broadcast processing apparatus 1 recognizes that the EPG data 60 is the EPG data of the first system from the broadcasting wave, at the time when the tuner 18 of the broadcast processing apparatus 1 receives the EPG data. The EPG control section 15 of the broadcast processing apparatus 1 compares the EPG data 60 received by the tuner 18 of the broadcast processing apparatus 1 and the EPG data 61 of the first system that is contained in the EPG designating data 41 by referring to the EPG database 17-1 (step S12 of Fig. 12).

There are cases where the number of times of transmitting the EPG data 60 by the server section 6 is more than the number of times of updating the EPG data 60. That is, the server section 6 may transmit the EPG data 60 even when the EPG data 60 is not updated in a certain period of time. In such cases, the EPG data 60 is consistent with the EPG data 61 (YES in step S13 of Fig. 12). In this case, the EPG control section 15 of the broadcast processing apparatus 1 sets the date/time at which the EPG data 60 is received by the tuner 18 as the first acquisition date/time 51, and stores it in the EPG database 17-1 by relating it to the EPG data 61 that is contained in the EPG designating data 41 (step S14 of Fig. 12). That is, only the first acquisition date/time 51 is updated.

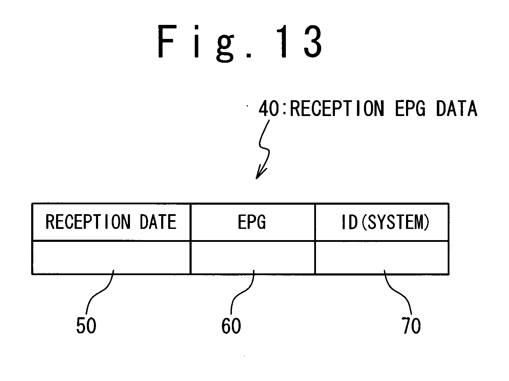

Meanwhile, there are such cases that the EPG data 60 is updated within a certain period of time and the server section 6 transmits that EPG data 60. In such a case, the EPG data 60 is not consistent with the EPG data 61 (NO in step S13 of Fig. 12). In this case, the EPG control section 15 of the broadcast processing apparatus 1 generates reception EPG designating data 40 as shown in Fig. 13. The reception EPG designating data 40 contains the reception date/time 50 at which the EPG data 60 is received by the tuner 18 of the broadcast processing apparatus 1, the EPG data 60, and the identifier 70 for identifying the first system as the system for receiving the EPG data 60. One of the specifications of the tuner 18 of the broadcast processing apparatus 1 is for the first system as it can be found from the first system data stored in the system database 16-1, so that the broadcast processing apparatus 1 can use the first system (YES in step S16 of Fig. 12). In this case, the EPG control section 15 of the broadcast processing apparatus 1 stores the reception EPG designating data 40 to the EPG database 17-1 as the EPG designating data 41 (step S17 of Fig. 12). That is, the EPG designating data 41 itself is updated.

Next, the EPG control section 15 of the broadcast processing apparatus 1 adds a header for transmitting the reception EPG designating data 40 to the network 5 (step S18 of Fig. 12). The EPG control section 15 of the broadcast processing apparatus 1 transmits the reception EPG designating data 40 to the network 5 (step S19 of Fig. 12).

When the broadcast processing apparatus 1 cannot use the first system (NO in step S16 of Fig. 12) in the EPG/antenna receiving process (step S4), the EPG control section 15 of the broadcast processing apparatus 1 performs steps S18 and S19 without performing a step S17.

Further, when the EPG control section 15 of the broadcast processing apparatus 1 transmits the reception EPG designating data 40 to the network 5 at a step S19, the transmitting destination may be broadcasted to the network 15. Alternatively, the reception EPG designating data 40 may be transmitted to a multicast group address at which each of the broadcast processing apparatuses can perform reception. Furthermore, when transmitting the reception EPG designating data 40 to the network 5, the entire reception EPG designating data 40 may not be transmitted at once, but may be transmitted bit by bit through dividing the reception EPG designating data 40 into some pieces by every unit time. This makes it possible to prevent the network 5 from having a temporary high load imposed thereon.

With the broadcast processing system of the present invention, the broadcast processing apparatus 1 can acquire the latest EPG data 60 of the first system through storing the reception EPG designating data 40 to the EPG database 17-1, when the tuner 18 receives the EPG data 60 of the first system transmitted from the server section 6 through the antenna 4. Thus, the user can read the latest EPG data 60 (EPG data 61) of the first system by using the broadcast processing apparatus 1 and, even when the program is added/changed, it is possible to select the program and view/record (recording-reserve) the broadcasting data of that program. Further, the broadcast processing apparatus 1 can reflect the EPG data 60 of the first system upon the broadcast processing apparatuses 2 and 3 as well, by transmitting the reception EPG designating data 40 to the network 5.

Furthermore, in the broadcast processing system of the present invention, there are cases as described above where the server section 6 may transmit the EPG data even when the EPG data 60 is not updated in a certain period of time. In such a case, if the contents of the EPG data 60 received by the tuner 18 and the EPG data 61 contained in the EPG designating data 41 are not consistent, it is preferable for the broadcast processing apparatus 1 of the broadcast processing system of the present invention to store the reception EPG designating data 40 to the EPG database 17-1 as the EPG designating data 41, and transmit the reception EPG designating data 40 to the network 5. This allows the broadcast processing apparatus 1 to avoid useless communication such as transmitting the reception EPG designating data 40 that contains the non-updated EPG data 60 to the network 5. Thus, the power consumed by the communication can be reduced.

The first user views the broadcasting data of the program "1" of the first system by using the broadcast processing apparatus 2. In this case, the broadcast processing apparatus 2 performs the broadcasting data receiving process (step S1) and can also acquire the latest EPG data 60 of the first system, for example (Step S5 of Fig. 11; EPG/network receiving process).

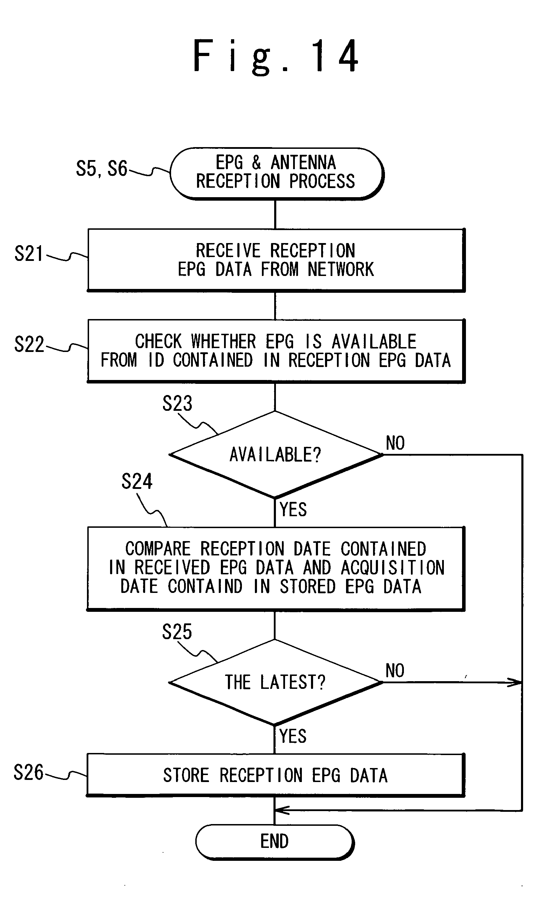

In the EPG/network receiving process (step S5), the EPG control section 15 of the broadcast processing apparatus 2 receives via the network 5, the reception EPG designating data 40 that is transmitted from the broadcast processing apparatus 1 (step S21 of Fig. 14). The EPG control section 15 of the broadcast processing apparatus 2 recognizes that the EPG data 60 contained in the reception EPG designating data 40 is the EPG data of the first system from the identifier 70 that is contained in the reception EPG designating data 40. That is, the identifier 70 contained in the reception EPG designating data 40 indicates whether or not the tuner 18 of the broadcast processing apparatus 2 can receive the broadcasting data of the program of the first system that corresponds to the EPG data 60 contained in the reception EPG designating data 40.

The EPG control section 15 of the broadcast processing apparatus 2 refers to the system database 16-2 based on the identifier 70 contained in the reception EPG designating data 40 to check whether or not it is the useable EPG data (step S22 of Fig. 14).

Based on the first system data stored in the system database 16-2, the broadcast processing apparatus 2 can use the first system (YES in step S23 of Fig. 14). That is, since one of the specifications of the tuner 18 of the broadcast processing apparatus 2 is for the first system, the identifier 70 contained in the reception EPG designating data 40 indicates that the tuner 18 of the broadcast processing apparatus 2 can receive the broadcasting data of the program of the first system corresponding to the EPG data 60 contained in the reception EPG designating data 40. In this case, the EPG control section 15 of the broadcast processing apparatus 2 refers to the EPG database 17-2 to compare the reception date/time 50 contained in the reception EPG designating data 40 and the acquisition date/time 51 contained in the EPG designating data 41 (step S24 of Fig. 14).

As a result of comparison obtained in step S24, the reception date/time 50 contained in the reception EPG designating data 40 is newer than the acquisition date/time 51 contained in the EPG designating data 41 (YES in step S25 of Fig. 14). In this case, the EPG control section 15 of the broadcast processing apparatus 2 stores the reception EPG designating data 40 in the EPG database 17-2 as the EPG designating data 41 (step S26 of Fig. 14). That is, the EPG data 41 itself is updated.

When the identifier 70 contained in the reception EPG designating data 40 indicates the third system in the EPG/network receiving process (step S5), the broadcast processing apparatus 2 cannot use the third system (NO in step S23 of Fig. 14), since the third system is not the specification of the tuner 18. That is, the identifier 70 contained in the reception EPG designating data 40 indicates that the tuner 18 of the broadcast processing apparatus 2 cannot receive the broadcasting data of the program of the third system corresponding to the EPG data 60 contained in the reception EPG designating data 40. In this case, the EPG control section 15 of the broadcast processing apparatus 2 cancels the reception EPG designating data 40, and ends the operation.

Further, as a result of comparison obtained at step 524, if the reception date/time 50 contained in the reception EPG designating data 40 is not newer than the acquisition date/time 51 contained in the EPG designating data 41 (NO in step S25 of Fig. 14), the EPG control section 15 of the broadcast processing apparatus 2 cancels the reception EPG designating data 40, and ends the operation.

According to the broadcast processing system of the present invention, even when the user is viewing the broadcasting data of the program "1" of the first system, for example, by using the broadcast processing apparatus 2, i.e. when the tuner 18 of the broadcast processing apparatus 2 is being used, the broadcast processing apparatus 2 can acquire the latest EPG data 60 of the first system through storing the reception EPG designating data 40 in the EPG database 17-2, when receiving the reception EPG designating data 40 transmitted from the broadcast processing apparatus 1 via the network 5. Thus, the user can read the latest EPG data 60 (EPG data 61) of the first system by using the broadcast processing apparatus 1 and, even when a program is added/changed, it is possible to select that program and view/record (recording-reserve) the broadcasting data of the program.

Furthermore, in the broadcast processing system according to the present invention, the broadcast processing apparatuses 1 - 3 acquire the latest EPG data 60 at all times. Thus, when it is the EPG data 60 of the first system, for example, each of the EPG databases 17-1, 17-2, and 17-3 thereof has the same EPG data 61 stored therein at all times. Therefore, when the broadcast processing apparatus 2 receives the reception EPG designating data 40 that is transmitted from the broadcast processing apparatus 1, it is not necessary to compare the contents of the EPG data 60 contained in the reception EPG designating data 40 and the EPG data 61 contained in the EPG designating data 41, but the reception date/time 50 contained in the reception EPG designating data 40 and the first acquisition date/time 51 contained in the EPG data 61 may only be compared. As described, when the receiving date/time 50 contained in the reception EPG designating data 40 from the broadcast processing apparatus 1 is not consistent with the first acquisition date/time 51 contained in the EPG data 61, it is preferable for the broadcast processing apparatus 2 to store the reception EPG designating data 40 to the EPG database 17-2 as the EPG designating data 41.

Furthermore, in the broadcast processing system of the present invention, it is assumed that the first system is the terrestrial analog system, the second system is the BS digital system, and the third system is the terrestrial digital system, for example. That is, it is assumed that the specifications of the tuner 18 of the broadcast processing apparatus 1 are the terrestrial analog system, BS digital system, the terrestrial digital system, the specifications of the tuner 18 of the broadcast processing apparatus 2 are the terrestrial analog system, the BS digital system, and the specifications of the tuner 18 of the broadcast processing apparatus 3 are the terrestrial analog system, the terrestrial digital system.

The broadcast processing apparatus 1 receives the EPG data 60 of the terrestrial analog system from the server section 6, and transmits the reception EPG designating data 40 to the network 5. In this case, the specification of the tuner 18 of the broadcast processing apparatus 2 is also the terrestrial analog system. Thus, the identifier 70 contained in the reception EPG designating data 40 indicates that the tuner 18 of the broadcast processing apparatus 2 can receive the broadcasting data corresponding to the EPG data 60 of the terrestrial analog system. Therefore, the broadcast processing apparatus 2 can use the EPG data 60 contained in the reception EPG designating data 40 from the broadcast processing apparatus 1. When the reception date/time 50 contained in the reception EPG designating data 40 is newer than the acquisition date/time 51 contained in the EPG designating data 41, it is preferable for the broadcast processing apparatus 2 to store the reception EPG designating data 40 in the EPG database 17-2 as the EPG designating data 41. It is the same for the case of the broadcast processing apparatus 3. As described, according to the broadcast processing system of the present invention, when the tuners 18 of the respective broadcast processing apparatuses have the specifications of the same system, it is possible for the apparatuses to acquire the latest EPG data 60 of that system at all times.

The second user records the program "2" of the first system by using the broadcast processing apparatus 3. In this case, the broadcast processing apparatus 3 performs the broadcasting data receiving process (step S2) and can also acquire the latest EPG data 60 of the first system, for example (step S6 of Fig. 11; EPG/network receiving process).

The EPG/network receiving process (step S6) is the same process as the EPG/network receiving process (step S5), and the effects thereof are the same as well. In this case, the broadcast processing apparatus 3 can execute the above-described steps of S31 - S36, when the broadcast processing apparatus 2 is replaced with the broadcast processing apparatus 3, the system database 16-2 is replaced with the system database 16-3, and the EPG database 17-2 is replaced with the EPG database 17-3.

When the identifier 70 contained in the reception EPG designating data 40 indicates the second system in the EPG/network receiving process (step S6), the broadcast processing apparatus 2 cannot use the second system (NO at a step S23 of Fig. 14), since the second system is not the specification of the tuner 18 of the broadcast processing apparatus 2. That is, the identifier 70 contained in the reception EPG designating data 40 indicates that the tuner 18 of the broadcast processing apparatus 3 cannot receive the broadcasting data of the program of the second system corresponding to the EPG data 60 contained in the reception EPG designating data 40. In this case, the EPG control section 15 of the broadcast processing apparatus 3 cancels the reception EPG designating data 40, and ends the operation.

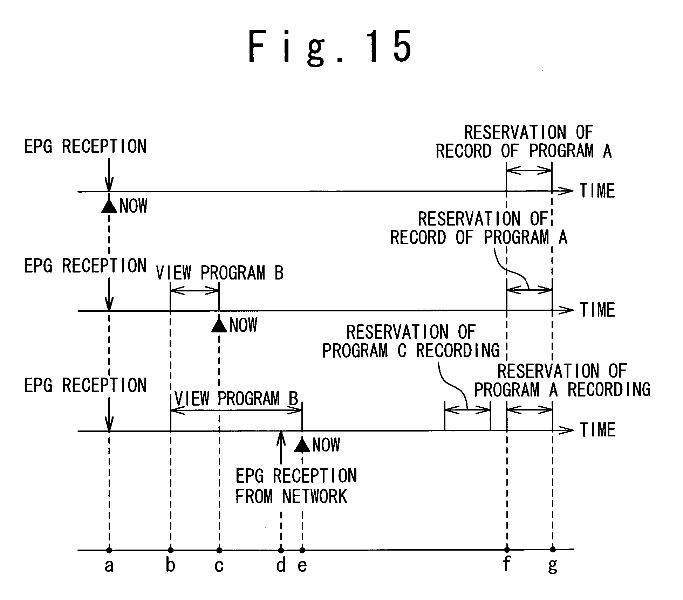

The operation of the broadcast processing system according to the present invention will be described by referring to a specific example. As shown in Fig. 15, it is assumed that the time passes in the order of a, b, c, d, e, f, g as the date and time.

At the time a, the broadcast processing apparatuses 1 - 3 acquire the latest data 60. In this case, the reception EPG designating data 40 containing the latest EPG data 60 is stored in the EPG databases 17-1, 17-2, and 17-3 as the EPG designating data 41. The explanation about the broadcast processing apparatus 3 will be omitted hereinafter.

After that time a, the first user reads the latest EPG data 60 (EPG data 61 contained in the EPG data 41) of the terrestrial analog system, for example, and reserves to record the program A (broadcasting data) by using the broadcast processing apparatus 2. In this case, the broadcast processing apparatus 2 performs the above-described recording set process. It is noted that the program A is a program broadcasted during the time f - time g.

At the time b, the first user views the broadcasting data of the program B of the terrestrial analog system, for example, by using the broadcast processing apparatus 2. In this case, the broadcast processing apparatus 2 executes the broadcasting data receiving processing (step S2). It is noted that the program B is not a program of a specific channel.

At the time c, the first user also views the broadcasting data of the program B by using the broadcast processing apparatus 2. In this case, the broadcast processing apparatus 2 also performs the broadcasting data receiving process (step S2). Further, since the program B is not the program of a specific channel, the broadcast processing apparatus 2 is in the state where it cannot acquire the latest EPG data 60, for example, from the server section 6.

At the time d, the first user also views the broadcasting data of the program B by using the broadcast processing apparatus 2. In this case, the broadcast processing apparatus 2 also performs the broadcasting data receiving process (step S2).

At the time d, the second user views the broadcasting data of the program of a specific channel of the terrestrial analog system, for example, by using the broadcast processing apparatus 1. In this case, the broadcast processing apparatus 1 performs the specific channel broadcast processing data receiving process (step S3) and the EPG/antenna receiving process (step S4) to acquire the latest EPG data 60. At this time, the reception EPG designating data 40 containing the latest EPG data 60 is stored in the EPG database 17-1 as the EPG designating data 41, and the reception EPG designating data 40 is transmitted to the network 5.

At the time d, the broadcast processing apparatus 2 acquires the latest EPG data by storing the reception EPG designating data 40 in the EPG database 17-2, when receiving the reception EPG designating data 40 transmitted from the broadcast processing apparatus 1 via the network 5. In this case, the broadcast processing apparatus 2 performs the EPG/network receiving process (step S5), and the reception EPG designating data 40 containing the latest EPG data 60 is stored in the EPG database 17-2 as the EPG designating data 41.

At the time e, the first user ends to view the program B. For example, the first user's favorite program C is added/changed to be written on the EPG data 60 that is updated at the time d. In this case, the first user can reserve the recording of the added/changed program C through reading the latest EPG data 60 (EPG data 61 contained in the EPG designating data 41) of the terrestrial analog system by using the broadcast processing apparatus 2.

Now, the differences between the broadcast processing system according to the present invention and the systems described in the first conventional example and the second conventional example will be described.

As described above, with the broadcast processing system of the present invention, the broadcast processing apparatuses 1-3 can acquire the latest EPG data at all times. For example, the broadcast processing apparatus 1 can acquire the latest EPG data 60 by storing the reception EPG designating data 40 in the EPG database 17-1, when the tuner 18 thereof receives the EPG data 60 transmitted from the server section 6 through the antenna 4. At this time, even if the tuner 18 of the broadcast processing apparatus 2 is being used, the broadcast processing apparatus 2 can acquire the latest EPG data 60 by storing the reception EPG designating data 40 in the EPG database 17-2, when receiving the reception EPG designating data 40 transmitted from the broadcast processing apparatus 1 via the network 5. Further, even if the tuner 18 of the broadcast processing apparatus 3 is being used, the broadcast processing apparatus 3 can acquire the latest EPG data 60 by storing the reception EPG designating data 40 in the EPG database 17-3, when receiving the reception EPG designating data 40 transmitted from the broadcast processing apparatus 1 via the network 5.

As described, the broadcast processing apparatuses 1 - 3 according to the broadcast processing system of the present invention can acquire the latest EPG data 60 at all times. Specifically, regarding the first system, the broadcast processing apparatuses 1 - 3 can acquire the latest EPG data 60 at all times. Regarding the second system, the broadcast processing apparatuses 1 and 2 can acquire the latest EPG data 60 at all times. Regarding the third system, the broadcast processing apparatuses 1 and 3 can acquire the latest EPG data 60 at all times.

In this way, even when a program is added/changed, the user can read the latest EPG 60 and select that program to view/record (recording-reserve) the broadcasting data of the program.

Meanwhile, it is difficult to acquire the latest EPG at all times with the system (video system) described in the first conventional example.

As described above, a user can view/record the broadcasting data of a program on the terrestrial wave system by using a first video unit. In this case, the tuner of the first video unit receives the broadcasting data of the program by the terrestrial wave system through the antenna.

Further, the user can view/record the broadcasting data of other programs on the terrestrial wave system. In this case, the tuner of the first video unit is not available, i.e. the tuner of the first video unit is being used, so that the first video unit uses the tuner of a second video unit via the network. At that time, the first video unit transmits a use request for using the tuner of the second video unit to the second video unit via the network. The tuner of the second video unit receives the broadcasting data of another program on the terrestrial wave system through the antenna and transmits it to the first video unit via the network, according to the use request.

When the broadcasting data is replaced with the EPG data in the video system disclosed in the first conventional example, it is necessary for the first video unit to transmit the user request to the second video unit via the network in order to acquire the EPG data. As described, in the video system disclosed in first conventional example, the first video unit cannot acquire the EPG data without making a request to the second video unit. Therefore, it is possible that the first video unit and the second video unit cannot acquire the latest EPG data at all times.

Furthermore, it is also difficult to acquire the latest EPG data at all times with the system (video system) described in the second conventional example.

As described above, the tuner receives EPG service data and EPG program data through the antenna as the EPG data that is transmitted with the broadcasting data. At that time, the tuner forms an EPG service list regarding receivable channels from the EPG service data, and converts the EPG program data to an EPG event list. The controller transmits a readout request for reading out the EPG data to the tuner via a bus for forming an application based on the EPG designating data. According to the readout request, the tuner transmits the EPG service list and the EPG event list to the controller as the EPG data via the bus.

In the data processor disclosed in the second conventional example, it is necessary for the controller to transmit the readout request to the tuner via the bus in order to acquire the EPG data. As described, in the data processor disclosed in the second conventional example, the controller cannot acquire the EPG data without making a request to the tuner. Therefore, it is possible that the controller and the tuner cannot acquire the latest EPG data at all times.

According to the broadcast processing system of the present invention as described above, a plurality of broadcast processing apparatuses can acquire the latest EPG data 60 at all times. While the present invention has been described by referring to the preferred embodiments, it is to be understood that the present invention is not necessarily limited to those embodiments, and various modifications are possible within the technical spirit and scope of the present invention. In the above-described embodiments, a plurality of broadcast processing apparatuses are provided in a household, for example. However, it should not be limited to such a case. The broadcast processing apparatuses may be provided to an office, an exhibition hall, or a sports stadium depending on the purposes. In the above-described embodiments, there are three apparatuses provided as the plurality of broadcast processing apparatuses. However, the number is not limited to three as long as there are two or more apparatuses. In the above-described embodiments, specifications of the tuner 18 of the first broadcast processing apparatus 1 are the first system, the second system, and third system, specifications of the tuner 18 of the broadcast processing apparatus 2 are the first system and the second system, and specifications of the tuner 18 of the broadcast processing apparatus 3 are the first system and the third system. However, it should not be limited to such case. The present invention can be practiced as long as there are the same systems in the specifications of the tuners 18 of the two or more broadcast processing apparatuses.

As described above, the broadcast processing system of the present invention can acquire the latest EPG data at all times.

## Claims

1. A broadcast processing system comprising:
a plurality of broadcast processing apparatuses connected to an antenna and a network,
wherein each of said plurality of broadcast processing apparatuses comprises:
a tuner;
an EPG control section; and
a storage unit,
said tuner of a first broadcast processing apparatus of said plurality of broadcast processing apparatuses receives EPG (Electric Program Guide) data transmitted from a server section through said antenna, and said tuner of a second broadcast processing apparatus of said plurality of broadcast processing apparatuses other than said first broadcast processing apparatus receives a broadcasting data transmitted from said server section through said antenna,
said EPG control section of said first broadcast processing apparatus stores the EPG data received by said tuner of said first broadcast processing apparatus to said storage unit of said first broadcast processing apparatus as a reception EPG designating data, and transmits the reception EPG designating data to said network, and
said EPG control section of said second broadcast processing apparatus receives the reception EPG designating data transmitted from said first broadcast processing apparatus via said network, and stores it to said storage unit of said second broadcast processing apparatus.

2. The broadcast processing system according to claim 1, wherein a first EPG designating data containing a first acquisition date/time and a first EPG data is stored in said storage unit of said first broadcast processing apparatus,
said EPG control section of said first broadcast processing apparatus refers to said storage unit of said first broadcast processing apparatus, and compares the EPG data received by said tuner of said first broadcast processing apparatus and said first EPG data contained in said first EPG designating data,
when the EPG received by said tuner of said first broadcast processing apparatus is consistent with said first EPG data contained in said first EPG designating data, said EPG control section of said first broadcast processing apparatus sets a reception date/time at which the EPG data is received by said tuner of said first broadcast processing apparatus as said first acquisition date/time, and stores said first acquisition date/time in said storage unit of said first broadcast processing apparatus by relating said first acquisition date/time to said first EPG data contained in said first EPG designating data,
when the EPG data received by said tuner of said first broadcast processing apparatus is not consistent with said first EPG data contained in said first EPG designating data, said EPG control section of said first broadcast processing apparatus stores a reception EPG designating data that contains the EPG data and the reception date/time in said storage unit of said first broadcast processing apparatus as the fist EPG designating data, and transmits the reception EPG designating data to said network.

3. The broadcast processing system according to claim 2, wherein a second EPG designating data containing said first acquisition date/time and said first EPG data is stored in said storage unit of said second broadcast processing apparatus,
said EPG control section of said second broadcast processing apparatus refers to said storage unit of said second broadcast processing apparatus when receiving the reception EPG designating data transmitted from said first broadcast processing apparatus, and compares the reception date/time contained in the reception EPG designating data and said first acquisition date/time contained in said second EPG designating data, and
when the reception date/time contained in the reception EPG designating data is newer than said first acquisition date/time contained in said second EPG designating date stored in said storage unit of said second broadcast processing apparatus, said EPG control section of said second broadcast processing apparatus stores the reception EPG designating data in said storage unit of said second broadcast processing apparatus as said second EPG designating data.

4. The broadcast processing system according to claim 3, wherein when the EPG data received by said first broadcast processing apparatus is not consistent with said first EPG data contained in said first EPG designating data, said EPG control section of said first broadcast processing apparatus stores the reception EPG designating data, which contains the EPG data, the reception date/time, and an identifier for identifying a system when receiving the EPG data, in said storage unit of said first broadcast processing apparatus as said first EPG designating data, and transmits the reception EPG designating data to said network,
The identifier indicates whether or not said tuner of said second broadcast processing apparatus can receive a broadcasting data corresponding to the EPG data, and
said EPG control section of said second broadcast processing apparatus receives the reception EPG designating data transmitted from said first broadcast processing apparatus, and stores the reception EPG data in said storage unit of said second broadcast processing apparatus as said second EPG data, when the identifier contained in the reception EPG designating data indicates that said tuner of said second broadcast processing apparatus can receive the broadcasting data corresponding to the EPG data, and the reception date/time contained in the reception EPG designating data is newer than said first acquisition date/time contained in said second EPG data stored in said storage unit of said second broadcast processing apparatus.

5. The broadcast processing system according to any of claims 1 to 4, wherein said tuner of said first broadcast processing apparatus receives the broadcasting data of a specific channel transmitted from said server section through said antenna, and receives the EPG transmitted from said server section through said antenna.

6. A method of acquiring an EPG (Electric Program Guide) data, comprising:
receiving an EPG data transmitted from a server section through an antenna by a first tuner of a first broadcast processing apparatus;
receiving a broadcasting data transmitted from said server section through said antenna by a second tuner of a second broadcast processing apparatus;
storing the EPG data received by said first tuner of said first broadcast processing apparatus in a first storage unit of said first broadcast processing apparatus as a reception EPG designating data, and transmitting the reception EPG designating data from said first broadcast processing apparatus to a network; and
receiving the reception EPG designating data transmitted from said first broadcast processing apparatus via said network, by said second broadcast processing apparatus, to store in a second storage unit of said second broadcast processing apparatus.

7. The method according to claim 6, wherein said transmitting the reception EPG designating data to a network comprises:
referring to said first storage unit in which a first EPG designating data containing a first acquisition date/time and a first EPG data to compare the EPG data received by said first tuner and said first EPG data contained in said first EPG designating data;
when the EPG received by said first tuner is consistent with said first EPG data contained in said first EPG designating data, setting a reception date/time at which the EPG data is received by said first tuner as said first acquisition date/time;
storing said first acquisition date/time in said storage unit by relating said first acquisition date/time to said first EPG data contained in said first EPG designating data;
when the EPG data received by said first tuner is not consistent with said first EPG data contained in said first EPG designating data, storing a reception EPG designating data containing the EPG data and the reception date/time in said first storage unit as the fist EPG designating data; and
transmitting the reception EPG designating data to said network.

8. The method according to claim 7, wherein said receiving said reception EPG designating data via said network comprises:
when the reception EPG designating data transmitted from said first broadcast processing apparatus is received, referring to said second storage unit in which said second EPG designating data containing said first acquisition date/time and said first EPG data is stored to compare the reception date/time contained in the reception EPG designating data and said first acquisition date/time contained in said second EPG designating data; and
when the reception date/time contained in the reception EPG designating data is newer than said first acquisition date/time contained in said second EPG designating date, storing the reception EPG designating data in said second storage unit as said second EPG designating data.

9. The method according to claim 8, wherein said transmitting the reception EPG data comprises:
when the EPG data received by said first tuner of said first broadcast processing apparatus is not consistent with said first EPG data contained in the first EPG designating data, storing the reception EPG designating data, which contains the EPG data, the reception date/time, and an identifier for identifying a system when receiving the EPG data, in said first storage unit of said first broadcast processing apparatus as said first EPG designating data; and
transmitting the reception EPG designating data to said network,
wherein the identifier indicates whether or not said tuner of said second broadcast processing apparatus can receive a broadcasting data corresponding to the EPG data, and
said receiving the reception EPG designating data through said network; and
storing the reception EPG data in said second storage unit of said second broadcast processing apparatus as the second EPG data, when the identifier contained in the reception EPG designating data indicates that said second tuner can receive the broadcasting data corresponding to the EPG data, and the reception date/time contained in the reception EPG designating data is newer than said first acquisition date/time contained in said second EPG data stored in said second storage unit.

10. The method according to any of claims 6 to 9, wherein said receiving the EPG data by said first tuner through said antenna comprises:
receiving the broadcasting data of a specific channel transmitted from said server section through said antenna; and
receiving the EPG data transmitted from said server section through said antenna.
